# EUROPEAN PATENT APPLICATION

(11) **EP 2 425 904 A1**
(43) Date of publication of application: **07.03.2012**
(21) Application number: 10175602.1
(22) Date of filing: 07.09.2010
(51) Int. Cl.: B09C 1/00, E02D 1/02, E02D 1/04

(54) **Stand pipe for environmental monitoring made of biodegradable material**

(71) Applicant: P&J Holding B.V., 3861 RJ Nijkerk (NL)
(72) Inventor: Jongerius, Eric Christoffel Maria, 3861 RJ Nijkerk (NL)
(74) Representative: De Vries & Metman

(57) **Abstract**

Method and standpipe for soil investigation or treatment using a stand pipe having one end at ground level and another end provided with filter openings, wherein at least a part of the stand pipe is made of a biodegradable plastic. Optionally, after use the stand pipe can be filled with a promoting decomposition of the biodegradable material,

## Description

The present invention relates to a stand pipe and to a method for soil treatment, such as soil investigation and/or soil decontamination, using a stand pipe comprising one end provided with filter openings. Such standpipes may be used for extracting or supplying air, water or functional compounds from: or into the soil or ground water. The standpipes can for instance form part or a stand pipe piezometer, a soil sampler, or a filter for ground water extraction for excavation drainage, for deep wells or for lowering ground water level.

Piezometers comprise a stand pipe with a perforated filter section which is inserted into the ground, crossing a number of different ground layers. Such piezometers often have a steel stand pipe which can be removed after use. Piezometers with stand pipes of PVC or HDPE are also used.

Often, piezometers are used for a series of measurements over a limited period. The piezometers are for instance used in projects for preparation of a building site or for soil decontamination. After finalizing such projects removal of the stand pipe piezometers is cumbersome and could create an open connection between different ground, layers, e.g., between different water containing layers previously sealed by water tight clay layers. On the other hand, leaving the standpipes behind results in a permanent bore through several ground layers resulting in an undesirable disorder of the ground structure.

The same holds for other types of soil investigation or decontamination facilities using a soil penetrating stand pipe, such as soil samplers.

It is an object of the invention to provide a method and a stand pipe for soil treatment which can be easily dismantled allowing the soil to gradually restore the left bore.

The object of the invention is achieved with a stand pipe for use in soil treatment or investigation, the stand pipe comprising one end provided with filter openings, wherein the stand pipe is at least partially made of a biodegradable polymeric material.

After use, the stand pipe material is gradually decomposed by microbiological digestion. Since the decomposition takes place in a gradual manner the space left by the decomposed stand pipe wall is gradually refilled, e.g., by the surrounding ground material or from inside out by a filer material within the stand pipe, without substantial distortion of the ground structure.

Biodegradable polymers are polymeric materials that decompose into non-polymeric components such as water and CO2 in natural aerobic or anaerobic environments under the influence of microorganisms. Suitable biodegradable polymers are for instance bioplastics based on starch and/or cellulose, polyhydroxyalkanoate (PHA), polylactic acid (PLA), polyvinylalcohol (PVA), polymerized seed oils or modifications, blends and/or hybrids thereof. Optionally, the biodegradable pastics can be blended with other types of polymers, such as polyolefins.

Suitable PHA polyesters include for instance polyhydroxybutyrates (PHB), such as poly(3-hydroxybutyrate), copolymers of 3-hydroxybutyrate and 3-hydroxyvalerate, such as Biopole® available from Monsanto, poly-(ε)-caprolactone, such as EnviroPlastic® of Planet Polymer technologies, polypropylene lactone, and polyesters of 3-hydroxy fatty acids having a carbon chain of 6 - 12 carbons.

Commercially available examples of suitable polyesters include Biomax® of DuPont, Eastar Bio® Copolyester 14766 of Eastman, and Bionolle® of Showa Highpolymer.

Ordinary polyvinyls, polyurethanes, polyamides or polyolefins, particularly polyethylene (e.g., HDPE or LDPE) or polypropylene, can be made biodegradable by the use of additives initiating or catalyzing biodegradation. Suitable additives are for instance commercially available as Addiflex®, Degrariovon® and Aquanovon® from Novon International, and E2S®. Biodegradable fillers, such as starch or cellulose based fillers can be added.

Optionally, an activator, such as a catalyst or initiator, is added to the stand pipe material after use of the stand pipe. Such an activator can for instance comprise one or more enzymes, microorganisms producing such enzymes, micronutritients or trace materials promoting propagation of such microorganisms, and/or chemical agents. Additionally, physical parameters, such as temperature, can be used to initiate or accelerate biodegradation.

Chemical agents that can be used for initiating or accelerating biodegradation processes can for instance include agents for adjusting the pH to a level optimized for the desired microbiological activity. Such pH adjustment agents can for example be strong alkali or acidic aqueous solutions.

Biodegradation of PHA can be effected by carboxyesterases, such as extracellular PHA depolymerases (e-PHA depolymerases). Particular examples are EC 3.1.1.75 and EC 3.1.1.76. Microorganisms secreting PHA depolymerases are for instance Alcaligenes faecalis, Comamonas acidovorans, Pseudomonas picketii, Pseudomonas lemoignei, Pseudomonas testosteroni, penicillium pinophilum.

Other suitable enzymes include lipases, e.g., those produced by fungi such as Rhizopus delemer, can also be used for decomposing PHA and is particularly suitable for decomposing side-chain-free PHA's such as poly-(ε)-caprolactone and polypropylene lactone.

Micronutrients, such as trace materials, can be used for stimulating and promoting propagation of desired microbiological populations, in particular iron, cobalt, chromium, copper, iodine, manganese, selenium, zinc, molybdenum and/or nickel, particularly as chelates.

Optionally, after use the stand pipe is filled with a filler material, for instance a water swellable material, such as a water swellable clay, e.g., bentonite or montmorillonite clay or mixtures thereof.

One or more of the above listed activators may be added to the filler material. When a mixture of swellable filler material and one or more biodegradation activators is used, biodegradation is initiated, or at least accelerated to a suitable process speed, by filling the stand pipe with the mixture. The mixture swells while the stand pipe is decomposed. Open connections between the various water containing and watertight ground layers and collapse of the bore is effectively prevented.

The stand pipes can be made by any suitable production method, such as for instance extrusion moulding. The stand pipe can comprise a plurality of tubular segments, which can for instance be interconnected by screw threaded connections. The different segments can be made of different materials. For instance, segments planned to be located in use in a waterfree layer can be made of a different biodegradable plastic than segments in another, water containing ground layer which can for example be made of a plastic which is biodegradable by hydrolysis.

Optionally, standpipes for piezometers can be closed by a cap with a lock, if so desired. Other types of standpipes are generally not capped.

Optionally, the standpipes can be operatively connected to one or more further lines, e.g. horizontal pipe lines,

The present invention will be elucidated with reference to the drawings wherein:
- Figure 1:: shows a piezometer comprising an embodiment of a stand pipe according to the present invention;
- Figure 2:: shows the piezometer of Figure 1 dismantled by a method according to the present invention.

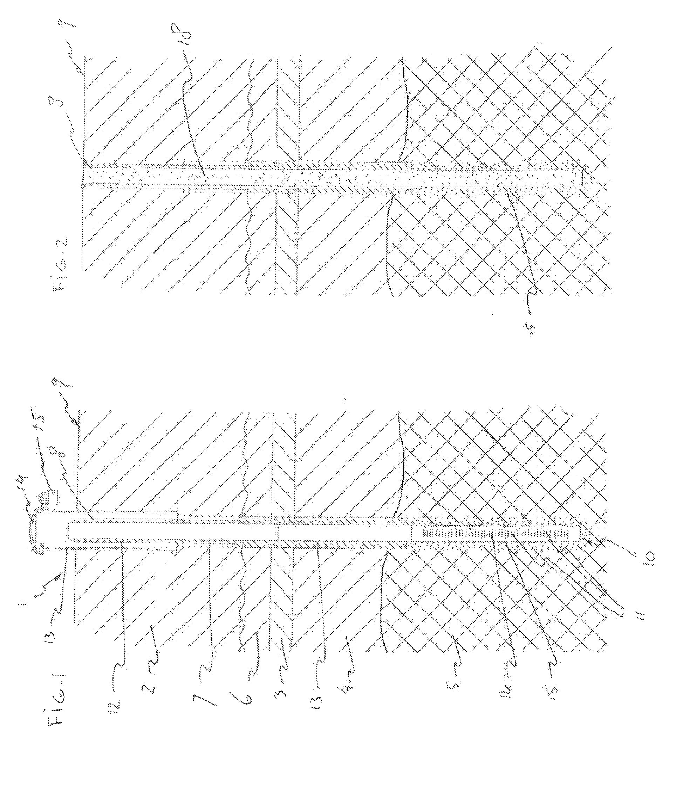

Figure 1 shows a piezometer 1 vertically extending through a number of ground layers 2, 3, 4, 5. Upper layer 2 is a sand layer comprising ground water 6. Lower layer 5 is also a water containing layer. Intermediate layer 3 is watertight clay layer separating water containing layer 2 from the lower layers 4 and 5.

The piezometer 1 comprises a stand pipe 7 of a biodegradable plastic, such as poly(3-hydroxybutyrate) or a high density polyethylene comprising additives promoting biodegradation, such as an effective amount of Degranovon®.

The stand pipe 7 has a top end 8 at ground level 9 and a lower end 10 provided with filter openings 11 forming a water permeable filter. The stand pipe 7 is made of a number of segments 12, 13, 14 interconnected by screw threaded connections. The lower segment 14 is a water extraction tube comprising lower end 10. This water extraction tube 14 is embedded in a packing of filter gravel 15.

The piezometer 1 is closed off by a cap 13 with a closeable lid 14 and padlock 15.

Figure 2 shows the piezometer 1 after it has been dismantled but before complete decomposition or the biodegradable material. The cap 13 with the lid 14 and padlock 15 have been removed. The standpipe 2 has been filled with a swellable bentonite 18 comprising a suitable activator in an effective amount for catalysing or initiating biodegradation of the standpipe 2. As a result of the swelling by the bentonite material, the space left behind, by the decomposed plastic is filled and the various penetrated ground layers are sealed off.

## Claims

1. Method for soil investigation or treatment using a stand pipe having one end at ground level and another end provided with filter openings, wherein at least a part of the stand pipe is made of a biodegradable plastic.

2. Method according to claim 1 wherein the after use of the standpipe, the stand pipe material is contacted with one or more activator agents to promote biodegradation of the stand pipe materials.

3. Method according to claim 2 wherein the activator comprises one or more additives selected from the group of enzymes, microorganisms producing such enzymes, micronutrients or trace materials promoting propagation of such microorganisms, and/or chemical agents.

4. Method according to any one of the preceding claims wherein after use of the standpipe the standpipe is filled with a filler material.

5. Method according to claim 4 wherein the filler material is a water swellable material.

6. Method according to claim 5 wherein the water swellable material is a water swellable clay, such as bentonite.

7. Method according to claims 3 and any one of claims 4, 5 or 6 wherein the activator is added to the water swellable filler material.

8. Method according to any one of the preceding claims wherein the biodegradable plastic comprises one or more polyolefins and one or more additives for rendering the polyolefins biodegradable.

9. Stand pipe for use in a method according to any one of the preceding claims wherein the stand pipe comprises one end provided with filter openings, therein the stand pipe is at least partly made of a biodegradable plastic.

10. Piezometer comprising a stand pipe according to claim 9.

11. Soil sampler comprising a stand pipe according to claim 9.
